(19) Europäisches Patentamt
European Patent Office
Office européen des brevets

(11) **EP 4 693 582 A1**

(12) **EUROPEAN PATENT APPLICATION**
published in accordance with Art. 153(4) EPC

(43) Date of publication:
**11.02.2026 Bulletin 2026/07**

(21) Application number: **23929297.2**

(22) Date of filing: **30.03.2023**

(51) International Patent Classification (IPC):
**H01M 10/0587** (2010.01)   **H01M 4/13** (2010.01)
**H01M 10/0525** (2010.01)

(52) Cooperative Patent Classification (CPC):
**H01M 4/13; H01M 10/0525; H01M 10/0587;**
**Y02E 60/10**

(86) International application number:
**PCT/CN2023/085089**

(87) International publication number:
**WO 2024/197700 (03.10.2024 Gazette 2024/40)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Ningde Amperex Technology Limited**
**Ningde City, Fujian Province 352100 (CN)**

(72) Inventor: **KONG, Sen**
**Ningde City, Fujian Province, 352100 (CN)**

(74) Representative: **Kraus & Lederer PartGmbB**
**Thomas-Wimmer-Ring 15**
**80539 München (DE)**

(54) **SECONDARY BATTERY AND ELECTRONIC APPARATUS**

(57)     This application provides a secondary battery and an electronic apparatus. The secondary battery includes an electrode assembly. The electrode assembly includes a positive electrode plate, a negative electrode plate, and a separator. The separator is disposed between the positive electrode plate and the negative electrode plate. The negative electrode plate includes a negative electrode current collector and a negative electrode active material layer. A surface of the negative electrode active material layer facing towards the positive electrode plate has grooves, a width of the groove is W mm, and a spacing of the grooves is S mm. A thickness of the electrode assembly is $T_1$ mm, satisfying: $W \geq S \times$ $T_1/1000$. In this application, with the width of the groove, the spacing of the grooves, and the thickness of the electrode assembly adjusted to satisfy the ranges of this application, a contact area between a surface of the negative electrode plate and the separator can be adjusted according to lithium-ion batteries of different thicknesses, thereby increasing a binding force between the negative electrode plate and the separator. This improves stability of the negative electrode plate, mitigates deformation issues of the lithium-ion battery, and enhances cycling stability and safety of the lithium-ion battery.

FIG. 2

## Description

### TECHNICAL FIELD

This application relates to the field of electrochemical technologies, and in particular, to a secondary battery and an electronic apparatus.

### BACKGROUND

Secondary batteries such as lithium-ion batteries have characteristics of high specific energy, high operating voltage, low self-discharge rate, small volume, and light weight, and therefore have wide applications in the field of consumer electronics. With the wide use of lithium-ion batteries, the market imposes increasingly high requirements for the performance of lithium-ion batteries.

During repeated charge-discharge cycles, stress accumulates internally in a lithium-ion battery, causing deformation, which leads to issues such as excessively large thickness and accelerated cycling degradation of the lithium-ion battery, and affects the cycling stability of the lithium-ion battery. Additionally, as heat accumulates inside the lithium-ion battery during cycling, if the heat cannot be dissipated in time, the risk of thermal runaway increases, affecting the safety of the lithium-ion battery.

### SUMMARY

This application is intended to provide a secondary battery and an electronic apparatus to improve the cycling stability and safety of a lithium-ion battery.

It should be noted that in the content of this application, an example in which a lithium-ion battery is used as a secondary battery is used to explain this application. However, the secondary battery of this application is not limited to the lithium-ion battery. Specific technical solutions are as follows.

A first aspect of this application provides a secondary battery including an electrode assembly. The electrode assembly includes a positive electrode plate, a negative electrode plate, and a separator. The separator is disposed between the positive electrode plate and the negative electrode plate. The negative electrode plate includes a negative electrode current collector and a negative electrode active material layer. A surface of the negative electrode active material layer facing towards the positive electrode plate has grooves, a width of the groove is $W$ mm, and a spacing of the grooves is $S$ mm. A thickness of the electrode assembly is $T_1$ mm, satisfying: $W \geq S \times T_1/1000$. In this application, with the width of the groove, the spacing of the grooves, and the thickness of the electrode assembly adjusted to satisfy the ranges of this application, a contact area between a surface of the negative electrode plate and the separator can be adjusted according to lithium-ion batteries of different thicknesses, thereby adjusting a binding interface between the negative electrode plate and the separator. This improves stability of the negative electrode plate, mitigates deformation issues of the lithium-ion battery, and enhances cycling stability and safety of the lithium-ion battery.

In some embodiments of this application, $W \leq 2 \times S \times T_1$. In this application, with the width of the groove, the spacing of the grooves, and the thickness of the electrode assembly adjusted to satisfy the ranges of this application, a binding interface between the negative electrode plate and the separator can be adjusted, deformation in XY directions of the electrode plate can be mitigated, and stability of the negative electrode plate can be improved, thereby mitigating deformation issues of the lithium-ion battery, and enhancing cycling stability and safety of the lithium-ion battery.

In some embodiments of this application, $S \times T_1/400 \leq W \leq S \times T_1/2$. In this application, with the width of the groove, the spacing of the grooves, and the thickness of the electrode assembly adjusted to satisfy the ranges of this application, an effective binding area between the grooves on the surface of the negative electrode plate and the separator can be increased, thereby increasing a binding force between the negative electrode plate and the separator. This improves stability of the negative electrode plate, mitigates deformation issues of the lithium-ion battery, and enhances cycling stability and safety of the lithium-ion battery.

In some embodiments of this application, $0.05 \leq S \leq 10$, and/or $0.02 \leq W \leq 0.5$. In this application, with the width of the groove and the spacing of the grooves adjusted within the above ranges, a contact area between a first binding layer in the separator and the grooves on the surface of the negative electrode active material layer can be increased, thereby increasing a binding force between the negative electrode plate and the separator. This improves stability of the negative electrode plate, mitigates deformation issues of the lithium-ion battery, and enhances cycling stability and safety of the lithium-ion battery.

In some embodiments of this application, an OI value of the negative electrode plate and $S$ satisfy: $S/OI \leq 0.5$; in one embodiment, $0.0025 \leq S/OI \leq 0.2$; and in one embodiment, $0.005 \leq S/OI \leq 0.03$. The OI value $= C_{004}/C_{110}$, $C_{004}$ is a peak area obtained from a diffraction line pattern of a (004) plane in an X-ray diffraction pattern, and $C_{110}$ is a peak area obtained from a diffraction line pattern of a (110) plane in an X-ray diffraction pattern.

This increases a binding force between the negative electrode plate and the separator, and reduces swelling deformation in XY directions of the electrode plate, thereby effectively reducing side reactions of the lithium-ion battery under high-rate charging conditions. This can further alleviate a polarization degree of the lithium-ion battery during charging, thereby increasing a charging speed of the lithium-ion battery.

In some embodiments of this application, a surface of the separator facing towards the negative electrode plate is provided with a binding layer, and the binding layer includes a polymer; where based on a mass of the binding layer, a content of the polymer is 30% to 100%. Through a synergistic effect of the above structural design and material selection, a binding force between the negative electrode plate and the separator can be increased, stability of the negative electrode plate can be improved, deformation issues of the lithium-ion battery can be mitigated, and cycling stability and safety of the lithium-ion battery can be enhanced.

In some embodiments of this application, a thickness of the binding layer is $T_2$ μm, and a depth of the grooves is H μm, satisfying: $H \leq T_2 + 20$. This can increase a contact area between the binding layer in the separator and the grooves on the surface of the negative electrode active material layer, thereby increasing a binding force between the negative electrode plate and the separator. This improves stability of the negative electrode plate, mitigates deformation issues of the lithium-ion battery, and enhances cycling stability and safety of the lithium-ion battery.

In some embodiments of this application, a cross-sectional area of the grooves is A μm², satisfying: $0.3 \times (W \times H) < A < 0.95 \times (W \times H)$, and $2 \leq H \leq 50$; and in one embodiment, $0.35 \times (W \times H) < A < 0.8 \times (W \times H)$. With A, W, and H adjusted to satisfy the above relationships and H additionally adjusted within the above range, a binding area between the surface of the negative electrode plate and the separator can be effectively increased, particularly a binding area between sides of the grooves and the separator, thereby increasing a binding force between the negative electrode plate and the separator. This improves stability of the negative electrode plate, mitigates deformation issues of the lithium-ion battery, and enhances cycling stability and safety of the lithium-ion battery.

In some embodiments of this application, the polymer includes at least one of polyvinylidene fluoride, polyvinylidene fluoride-hexafluoropropylene copolymer, styrene-butadiene copolymer, polyacrylonitrile, butadiene-acrylonitrile polymer, polyacrylic acid, polyacrylate, or acrylate-styrene copolymer. With the separator adjusted to include the above polymer in this application, interfacial binding force and heat resistance of the separator can be improved.

In some embodiments of this application, along a width direction of the negative electrode plate, the grooves form a structure penetrating through the negative electrode plate, where the grooves include a first segment with a width of $W_1$ and a second segment with a width of $W_2$, satisfying $1.2 < W_1/W_2 < 1.8$. With the above structure and the width relationship between the first segment and the second segment adjusted within the above range, a contact area between the surface of the negative electrode plate and the separator can be effectively increased, thereby increasing a binding force between the negative electrode plate and the separator.

In some embodiments of this application, along a width direction of the negative electrode plate, the grooves form a structure not penetrating through the negative electrode plate. With the above structure, local binding performance between the negative electrode plate and the separator can be improved, and stress release of the negative electrode active material during cycling is facilitated, thereby further improving cycling performance and cycling swelling of the secondary battery, and also facilitating reduction of process difficulty in preparing the grooves, so as to reduce production costs.

A second aspect of this application provides an electronic apparatus including the secondary battery described in the foregoing embodiments. Thus, the electronic apparatus has good cycling stability and safety.

This application provides the secondary battery and the electronic apparatus. Viewed from a thickness direction of the negative electrode plate, the surface of the negative electrode active material layer of the negative electrode plate has the grooves. In this application, with the width of the groove, the spacing of the grooves, and the thickness of the electrode assembly adjusted to satisfy the ranges of this application, the contact area between the surface of the negative electrode plate and the separator can be adjusted according to lithium-ion batteries of different thicknesses, thereby increasing the binding force between the negative electrode plate and the separator. This improves stability of the negative electrode plate, mitigates deformation issues of the lithium-ion battery, and enhances cycling stability and safety of the lithium-ion battery.

**BRIEF DESCRIPTION OF DRAWINGS**

The accompanying drawings described herein are intended for better understanding of this application, and constitute a part of this application. Example embodiments and descriptions thereof in this application are intended to interpret this application and do not constitute any improper limitation on this application.

FIG. 1 is a schematic structural diagram of an electrode assembly in some embodiments of this application;
FIG. 2 is a schematic cross-sectional structural diagram of an electrode assembly along its thickness direction in some embodiments of this application;

FIG. 3 is a schematic cross-sectional structural diagram of a negative electrode plate along its thickness direction in some embodiments of this application;

FIG. 4 is a top view of a negative electrode plate along its thickness direction in some embodiments of this application;

FIG. 5 is a schematic cross-sectional structural diagram of a separator along its thickness direction in some embodiments of this application;

FIG. 6 is a schematic structural diagram of a separator viewed along its thickness direction in some other embodiments of this application;

FIG. 7 is a schematic structural diagram of grooves in a negative electrode plate in some embodiments of this application;

FIG. 8 is a schematic structural diagram of grooves in a negative electrode plate in some other embodiments of this application; and

FIG. 9 is a schematic structural diagram of grooves in a negative electrode plate in some further embodiments of this application.

Reference signs: 10. electrode assembly, 20. positive electrode plate, 21. positive electrode current collector, 22. positive electrode active material layer, 30. negative electrode plate, 31. negative electrode current collector, 32. negative electrode active material layer, 40. separator, 41. substrate layer, 42. heat-resistant material layer, 321. groove, 431. binding layer, 3211. first segment, 3212. second segment, and 3213. third segment.

DESCRIPTION OF EMBODIMENTS

To make the objectives, technical solutions, and advantages of this application clearer, the following further describes this application in detail with reference to the accompanying drawings and embodiments. Apparently, the described embodiments are merely some but not all of the embodiments of this application. Based on the embodiments in this application, all other embodiments obtained by those skilled in the art without creative efforts shall fall within the protection scope of this application.

It should be noted that in specific embodiments, an example in which a lithium-ion battery is used as a secondary battery is used to illustrate this application. However, the secondary battery of this application is not limited to the lithium-ion battery. Specific technical solutions are as follows:

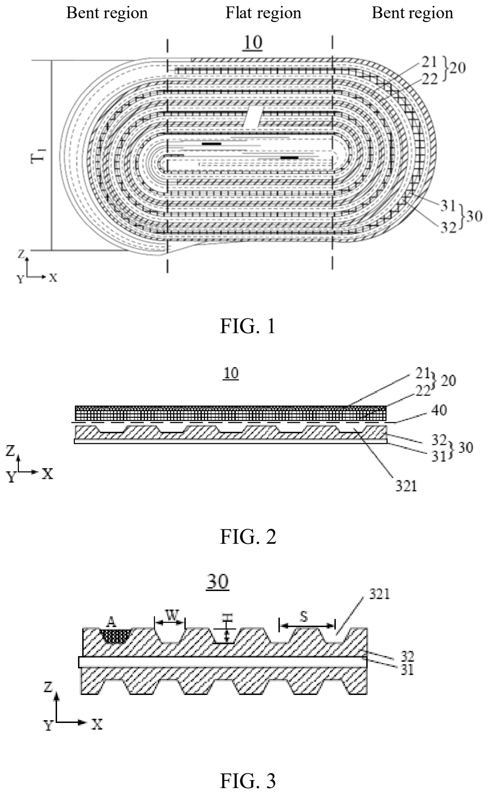

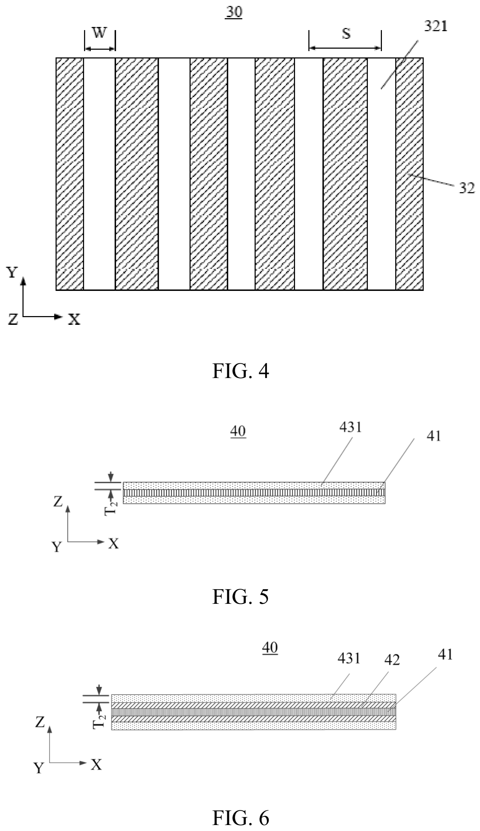

A first aspect of this application provides a secondary battery. As shown in FIG. 1, it includes an electrode assembly 10, where an X direction is a length direction of the electrode assembly 10, a Y direction is a width direction of the electrode assembly 10, and a Z direction is a thickness direction of the electrode assembly 10. As shown in FIG. 2, the electrode assembly 10 includes a positive electrode plate 20, a negative electrode plate 30, and a separator 40. The separator 40 is disposed between the positive electrode plate 20 and the negative electrode plate 30. The positive electrode plate 20 includes a positive electrode current collector 21 and a positive electrode active material layer 22. The negative electrode plate 30 includes a negative electrode current collector 31 and a negative electrode active material layer 32. A surface of the negative electrode active material layer 32 facing towards the positive electrode plate 20 has grooves 321. As shown in FIG. 3 and FIG. 4, a width of the groove 321 is $W$ mm, and a spacing of the grooves 321 is $S$ mm. As shown in FIG. 1, a thickness of the electrode assembly 10 is $T_1$ mm, satisfying: $W \geq S \times T_1/1000$. In this application, the width of the groove refers to a width of the groove at the surface of the negative electrode plate. The spacing of the grooves refers to a distance between two adjacent grooves. In this application, the negative electrode active material layer 32 may be disposed on one surface or two surfaces.

In this application, with the width of the groove, the spacing of the grooves, and the thickness of the electrode assembly adjusted to satisfy the ranges of this application, a contact area between a surface of the negative electrode plate and the separator can be adjusted according to lithium-ion batteries of different thicknesses, thereby increasing a binding force between the negative electrode plate and the separator. This improves stability of the negative electrode plate, mitigates deformation issues of the lithium-ion battery, and enhances cycling stability and safety of the lithium-ion battery.

In some embodiments of this application, $W \leq 2 \times S \times T_1$. In this application, with the width of the groove, the spacing of the grooves, and the thickness of the electrode assembly adjusted to satisfy the ranges of this application, a binding area between the grooves on the surface of the negative electrode plate and the separator can be effectively increased, thereby increasing a binding force between the negative electrode plate and the separator. This improves stability of the negative electrode plate, mitigates deformation issues of the lithium-ion battery, and enhances cycling stability and safety of the lithium-ion battery.

In some embodiments of this application, $S \times T_1/400 \leq W \leq S \times T_1/2$. In this application, with the width of the groove, the spacing of the grooves, and the thickness of the electrode assembly adjusted to satisfy the ranges of this application, a binding area between the grooves on the surface of the negative electrode plate and the separator can be effectively increased, thereby increasing a binding force between the negative electrode plate and the separator. This improves stability of the negative electrode plate, mitigates deformation issues of the lithium-ion battery, and enhances cycling stability and safety of the lithium-ion battery.

In some embodiments of this application, $0.05 \leq S \leq 10$, and/or $0.02 \leq W \leq 0.5$. Without being limited to any theory, in this application, with the width of the groove and the spacing of the grooves adjusted within the above ranges, a contact area between a first binding layer in the separator and the grooves on the surface of the negative electrode active material layer can be increased, thereby increasing a binding force between the negative electrode plate and the separator. This improves stability of the negative electrode plate, mitigates deformation issues of the lithium-ion battery, and enhances cycling stability and safety of the lithium-ion battery.

In some embodiments of this application, an OI value of the negative electrode plate and S satisfy: $S/OI \leq 0.5$; in one embodiment, $0.0025 \leq S/OI \leq 0.2$; and in one embodiment, $0.005 \leq S/OI \leq 0.03$. The OI value = $C_{004}/C_{110}$, $C_{004}$ is a peak area obtained from a diffraction line pattern of a (004) plane in an X-ray diffraction pattern, and $C_{110}$ is a peak area obtained from a diffraction line pattern of a (110) plane in an X-ray diffraction pattern.

The inventors have found through research that as the OI value increases, a tortuosity of lithium-ion transmission of graphite in the negative electrode active material increases, leading to increased polarization during charging of the lithium-ion battery, while a smaller OI value results in a deformation trend in XY directions of the battery. Without being limited to any theory, in this application, with the spacing of the grooves and the OI value of the negative electrode plate adjusted within the above ranges, a binding force between the negative electrode plate and the separator is increased, while swelling deformation in XY directions of the electrode plate is reduced, side reactions of the lithium-ion battery under high-rate charging conditions are effectively reduced, and a polarization degree of the lithium-ion battery during charging can be further alleviated, thereby increasing a charging speed of the lithium-ion battery.

In some embodiments of this application, a surface of the separator facing towards the negative electrode plate is provided with a binding layer, and the binding layer includes a polymer; where based on a mass of the binding layer, a content of the polymer is 30% to 100%.

For example, in some embodiments of this application, as shown in FIG. 5, the separator 40 includes a substrate layer 41 and a binding layer 431 disposed on a surface of the substrate layer 41. The binding layer 431 includes a polymer and a heat-resistant material. Through a synergistic effect of the above structural design and material selection, a binding force between the negative electrode plate and the separator can be increased, stability of the negative electrode plate can be improved, deformation issues of the lithium-ion battery can be mitigated, and cycling stability and safety of the lithium-ion battery can be enhanced. In addition, only one coating process is needed to obtain a binding layer containing both the polymer and the heat-resistant material, simplifying process steps and facilitating reduction of production costs. Based on a mass of the binding layer, a content of the polymer is 30% to 80%, and a content of the heat-resistant material is 20% to 70%.

For example, in some other embodiments of this application, as shown in FIG. 6, the separator 40 includes a substrate layer 41, a surface of the substrate layer 41 is sequentially provided with a heat-resistant material layer 42 and a binding layer 431, the heat-resistant material layer 42 includes a heat-resistant material, and based on a mass of the binding layer, a content of the polymer is 100%. Through a synergistic effect of the above structural design and material selection, a binding force between the negative electrode plate and the separator can be increased, stability of the negative electrode plate can be improved, deformation issues of the lithium-ion battery can be mitigated, and cycling stability and safety of the lithium-ion battery can be enhanced.

This application has no particular limitation on the heat-resistant material of the heat-resistant material layer, as long as the objectives of this application can be achieved. For example, the heat-resistant material may include at least one of ceramic material or heat-resistant polymer material. The ceramic material may include at least one of $Al_2O_3$, boehmite, $SiO_2$, $TiO_2$, MgO, ZnO, $ZrO_2$, or $SnO_2$. The heat-resistant polymer material may include at least one of polyimide and its derivatives, aromatic nylon and its modifications, phenolic resin, or polytetrafluoroethylene.

In some embodiments of this application, as shown in FIG. 3, a depth of the grooves 321 is H $\mu$m, and as shown in FIG. 5, a thickness of the first binding layer 431 is $T_2$ $\mu$m, satisfying: $H \leq T_2 + 20$. With H and $T_2$ adjusted to satisfy the above relationship, a contact area between the first binding layer in the separator and the grooves on the surface of the negative electrode active material layer can be increased, thereby increasing a binding force between the negative electrode plate and the separator. This improves stability of the negative electrode plate, mitigates deformation issues of the lithium-ion battery, and enhances cycling stability and safety of the lithium-ion battery.

In some embodiments of this application, as shown in FIG. 3, a depth of the grooves 321 is H $\mu$m, and as shown in FIG. 6, a thickness of the binding layer 431 is $T_2$ $\mu$m, satisfying: $H \leq T_2 + 20$, preferably, $H \leq T_2 + 15$. With H and $T_2$ adjusted to satisfy the above relationship, a contact area between the binding layer in the separator and the grooves on the surface of the negative electrode active material layer can be increased, thereby increasing a binding force between the negative electrode plate and the separator. This improves stability of the negative electrode plate, mitigates deformation issues of the lithium-ion battery, and enhances cycling stability and safety of the lithium-ion battery.

In some embodiments of this application, as shown in FIG. 3, a cross-sectional area of the grooves 321 is A $\mu m^2$, satisfying: $0.3 \times (W \times H) < A < 0.95 \times (W \times H)$, and $2 \leq H \leq 50$. In one embodiment, $0.35 \times (W \times H) < A < 0.8 \times (W \times H)$. In this application, the cross-sectional area of the groove refers to an area of a cross-section formed by the groove in a cross-section of the negative electrode plate along its thickness direction. In this application, with A, W, and H adjusted to satisfy the above relationships and H additionally adjusted within the above range, a binding area between the surface of the negative electrode plate and the separator can be effectively increased, particularly a binding area between sides of the grooves and the separator, thereby increasing a binding force between the negative electrode plate and the separator. This improves stability of the negative electrode plate, mitigates deformation issues of the lithium-ion battery, and enhances cycling stability and safety of the lithium-ion battery

In some embodiments of this application, the polymer includes at least one of polyvinylidene fluoride, polyvinylidene fluoride-hexafluoropropylene copolymer, styrene-butadiene copolymer, polyacrylonitrile, butadiene-acrylonitrile polymer, polyacrylic acid, polyacrylate, or acrylate-styrene copolymer, which facilitates improving the interfacial binding force of the separator.

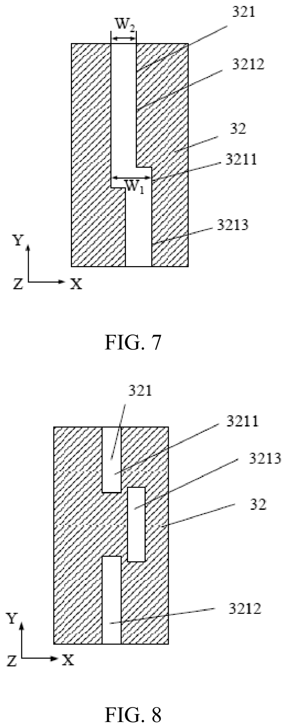

In some embodiments of this application, as shown in FIG. 7, along a width direction of the negative electrode plate 30, the grooves 321 form a structure penetrating through the negative electrode plate. The grooves 321 include a first segment 3211 with a width of $W_1$ and a second segment 3212 with a width of $W_2$, satisfying $1.2 < W_1/W_2 < 1.8$. As shown in FIG. 7, the penetrating groove 321 includes the first segment 3211, the second segment 3212, and a third segment 3213. With the above structure and the width relationship between the first segment and the second segment adjusted within the above range, a contact area between the surface of the negative electrode plate and the separator can be effectively increased, thereby increasing a binding force between the negative electrode plate and the separator.

In some embodiments of this application, as shown in FIG. 8, along a width direction of the negative electrode plate 30, the groove 321 forms a structure not penetrating through the negative electrode plate. As shown in FIG. 8, the grooves 321 have a first segment 3211, a second segment 3212, and a third segment 3213, where the first segment 3211, the second segment 3212, and the third segment 3213 do not overlap, and the third segment 3213 is located between the first segment 3211 and the second segment 3212. The first segment 3211, the second segment 3212, and the third segment 3213 may be arranged in parallel, thereby forming the non-penetrating groove 321. Viewed along a length direction of the electrode plate, there is a first overlapping region between the first segment 3211 and the second segment 3212, and there is a second overlapping region between the second segment 3212 and the third segment 3213. In the width direction of the electrode plate, lengths of the first overlapping region and the second region are less than 30% of a width of the electrode plate. With the above structure, local binding performance between the negative electrode plate and the separator can be improved, and stress release of the negative electrode active material during cycling is facilitated, thereby further improving cycling performance and cycling swelling of the secondary battery, and also facilitating reduction of process difficulty in preparing the grooves, so as to reduce production costs.

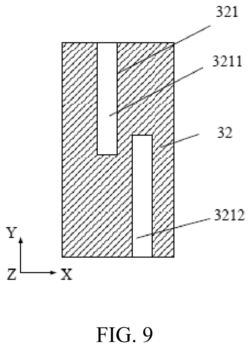

In some embodiments of this application, as shown in FIG. 9, along a width direction of the negative electrode plate 30, the groove 321 forms a structure not penetrating through the negative electrode plate. As shown in FIG. 9, the grooves 321 have a first segment 3211 and a second segment 3212, where the first segment 3211 and the second segment 3212 do not overlap, and the first segment 3211 and the second segment 3212 may be arranged in parallel, thereby forming the non-penetrating groove 321. Viewed along a length direction of the electrode plate, there is a first overlapping region between the first segment 3211 and the second segment 3212. In the width direction of the electrode plate, a length of the first overlapping region is less than 30% of a width of the electrode plate. With the above structure, local binding performance between the negative electrode plate and the separator can be improved, and stress release of the negative electrode active material during cycling is facilitated, thereby further improving cycling performance and cycling swelling of the secondary battery, and also facilitating reduction of process difficulty in preparing the grooves, so as to reduce production costs.

It can be understood that the electrode assembly of this application may be a wound structure, and an electrode plate thereof typically has a long side and a short side when unfolded. In one embodiment of this application, when the electrode assembly is a wound structure, a width direction thereof is an extension direction of the short side of the electrode plate when unfolded, and a length direction is an extension direction of the long side of the electrode plate when unfolded. The electrode plate of this application includes a positive electrode plate 20 and a negative electrode plate 30.

The secondary battery of this application may include any apparatus where an electrochemical reaction occurs, as long as the objectives of this application can be achieved. For example, the secondary battery may include but is not limited to: a lithium-ion secondary battery (lithium-ion battery), a sodium-ion secondary battery, a lithium polymer secondary battery, or a lithium-ion polymer secondary battery. A structure of the battery of this application includes but is not limited to a pouch battery cell, a prismatic hard-shell battery, or a cylindrical hard-shell battery.

This application has no particular limitation on the negative electrode current collector, as long as the objectives of this application can be achieved. For example, the negative electrode current collector may include copper foil, copper alloy foil, nickel foil, stainless steel foil, titanium foil, foamed nickel, foamed copper, a composite current collector, or the like. This application has no particular limitation on the thickness of the negative electrode current collector, as long as the objectives of this application can be achieved. For example, the thickness of the negative electrode current collector is 4 $\mu$m to 10 $\mu$m. In this application, the negative electrode active material layer may be disposed on one surface of the negative electrode current collector in a thickness direction thereof or two surfaces of the negative electrode current collector in a thickness direction thereof. It should be noted that the "surface" herein may be an entire region or a partial region of the negative electrode current collector. This is not particularly limited in this application, provided that the objectives of this application can be achieved.

This application has no particular limitation on the type of the negative electrode active material, as long as the objectives of this application can be achieved. For example, the negative electrode active material may include graphite, or a mixture of graphite with silicon, silicon oxide, or silicon carbide, and the graphite may be selected from artificial graphite or natural graphite. Optionally, the negative electrode active material layer further includes at least one of conductive agent, thickener, or binder. This application has no particular limitation on types of the conductive agent, thickener, and binder in the negative electrode active material layer, as long as the objectives of this application can be achieved. For example, the negative electrode binder may include but is not limited to at least one of polyvinyl alcohol, carboxymethyl cellulose, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly(1,1-difluoroethylene), polyethylene, polypropylene, polyacrylic acid, styrene-butadiene rubber, acrylated styrene-butadiene rubber, epoxy resin, or nylon. A mass ratio of the negative electrode active material, the conductive agent, the thickener, and the binder in the negative electrode active material layer is not particularly limited in this application, provided that the objectives of this application can be achieved. For example, a mass ratio of the negative electrode active material, the conductive agent, the thickener, and the binder in the negative electrode active material layer is (96-98):(0-1.5):(0.5-1.5):(1.0-1.9).

This application has no particular limitation on an OI value of the negative electrode plate, as long as the objectives of this application can be achieved, for example, the OI value may be 5 to 30.

This application has no particular limitation on a material of the separator substrate layer, and those skilled in the art can select according to actual needs, as long as the objectives of this application can be achieved. For example, a material of the separator substrate layer may include but is not limited to at least one of polyethylene, polypropylene, polyethylene terephthalate, or polyimide. Optionally, a polypropylene porous film, a polyethylene porous film, a polypropylene nonwoven fabric, a polyethylene nonwoven fabric, or a polypropylene-polyethylene-polypropylene porous composite film may be used.

This application has no particular limitation on a thickness of the first binding layer and/or the second binding layer in the separator, as long as the objectives of this application can be achieved. For example, a thickness of the first binding layer and/or the second binding layer may be 1 $\mu$m to 20 $\mu$m.

The secondary battery of this application further includes an electrolyte, and this application has no particular limitation on the electrolyte, and those skilled in the art can select according to actual needs, as long as the objectives of this application can be achieved. For example, at least one of ethylene carbonate (also referred to as ethylene carbonate, EC for short), propylene carbonate (PC), diethyl carbonate (DEC), ethyl propionate (EP), propyl propionate (PP), ethyl methyl carbonate (EMC), dimethyl carbonate (DMC), vinylene carbonate (VC), or fluoroethylene carbonate (FEC) is mixed at a specific mass ratio to obtain a non-aqueous organic solvent, and then a lithium salt is added for dissolving and mixing to uniformity. The "mass ratio" is not particularly limited in this application, provided that the objectives of this application can be achieved. A type of the lithium salt is not limited in this application, provided that the objectives of this application can be achieved. For example, the lithium salt may include at least one of $LiPF_6$, $LiBF_4$, $LiAsF_6$, $LiClO_4$, $LiB(C_6H_5)_4$, $LiCH_3SO_3$, $LiCF_3SO_3$, $LiN(SO_2CF_3)_2$, $LiC(SO_2CF_3)_3$, $LiSiF_6$, lithium bis(oxalato)borate (LiBOB), or lithium difluoroborate. A concentration of the lithium salt in the electrolyte is not particularly limited in this application, provided that the objectives of this application can be achieved. For example, a concentration of the lithium salt is 1.0 mol/L to 2.0 mol/L.

The positive electrode plate of this application may include a positive electrode active material layer and a positive electrode current collector. A type of the positive electrode active material is not particularly limited in this application, provided that the objectives of this application can be achieved. For example, the positive electrode active material may include at least one of lithium nickel cobalt manganese oxide, lithium nickel cobalt aluminum oxide, lithium iron phosphate, lithium-rich manganese-based material, lithium cobalt oxide, lithium manganese oxide, or lithium manganese iron phosphate. In this application, the positive electrode active material may further include a non-metal element. For example, the non-metal element includes at least one of fluorine, phosphorus, boron, chlorine, silicon, or sulfur, and these elements can further improve stability of the positive electrode active material. The positive electrode active material layer of this application may further include a conductive agent and a binder. This application has no particular limitation on a mass ratio of the positive electrode active material, the conductive agent, and the binder in the positive electrode active material layer, and those skilled in the art can select according to actual needs, as long as the objectives of this application can be achieved. For example, a mass ratio of the positive electrode active material, the conductive agent, and the binder in the positive electrode active material layer is (96-98):(1-3):(2-3).

This application has no particular limitation on the positive electrode current collector, as long as the objectives of this application can be achieved. For example, the positive electrode current collector may include aluminum foil, aluminum alloy foil, a composite current collector, or the like. This application has no particular limitation on the thickness of the positive electrode current collector, as long as the objectives of this application can be achieved. For example, a thickness of the positive electrode current collector is 5 $\mu$m to 20 $\mu$m. In this application, the positive electrode active material layer may be disposed on one surface of the positive electrode current collector in a thickness direction thereof or two surfaces of the positive electrode current collector in a thickness direction thereof. It should be noted that the "surface" herein may be an entire region or a partial region of the positive electrode current collector. This is not particularly limited in this application, provided that the objectives of this application can be achieved.

This application has no particular limitation on a preparation method of the negative electrode plate, as long as the objectives of this application can be achieved. For example, a preparation method of the negative electrode plate includes but is not limited to the following steps: dispersing a negative electrode active material, a conductive agent, a thickener, and a binder in deionized water to form a uniform negative electrode slurry; applying the negative electrode slurry on a negative electrode current collector, followed by drying and cold-pressing; and preparing grooves on a surface of the negative electrode plate, followed by cutting and slitting processes, to obtain a negative electrode plate with a structure as shown in FIG. 3.

This application has no particular limitation on a preparation method of the positive electrode plate, as long as the objectives of this application can be achieved. For example, a preparation method of the positive electrode plate includes but is not limited to the following steps: dispersing an active material, a conductive agent, and a binder in an NMP solvent to form a uniform positive electrode slurry, and applying the positive electrode slurry on a positive electrode current collector, followed by drying, cold-pressing, cutting, and slitting to obtain a positive electrode plate.

This application has no particular limitation on the shape of the grooves, as long as the objectives of this application can be achieved. For example, viewed from a length direction of the negative electrode plate, the shape of the grooves may include at least one of square, rectangle, trapezoid, triangle, or semicircle; and viewed from a thickness direction of the negative electrode plate, the shape of the grooves includes at least one of straight line, diagonal line, polyline, or curve.

This application has no particular limitation on a method for preparing the grooves, as long as the objectives of this application can be achieved. For example, the method may include but is not limited to laser etching, mechanical processing, or poreforming agent processing. Laser etching is used as an example. A width and a depth of the groove typically increase with a laser power, and a spacing of the grooves can usually be adjusted by a processing speed of the laser. Therefore, those skilled in the art can adjust parameters such as the width, depth, and spacing of the grooves by adjusting parameters such as laser power, processing speed, and a travel speed of electrode plate. In this application, as shown in FIG. 1, the electrode assembly includes a flat region and a bent region. During a preparation process of a lithium-ion battery, those skilled in the art can set the grooves in the bent region, that is, set the grooves in a region of the electrode assembly where the electrode plate is bent, thereby improving interfacial binding performance of the negative electrode plate in this region, and further enhancing cycling stability and safety of the lithium-ion battery.

This application has no particular limitation on a preparation method of the secondary battery, and well-known preparation methods in the art can be used, as long as the objectives of this application can be achieved. For example, a preparation method of the secondary battery includes but is not limited to the following steps: stacking a positive electrode plate, a separator, and a negative electrode plate in sequence, and performing an operation such as winding or folding on them as needed to obtain an electrode assembly with a wound structure, placing the electrode assembly into a packaging bag, injecting an electrolyte into the packaging bag, and performing sealing, to obtain a secondary battery.

A second aspect of this application provides an electronic apparatus including the secondary battery described in the foregoing embodiments. Thus, the electronic apparatus has good cycling stability and safety.

This application has no particular limitation on the electronic apparatus, which can be any electronic apparatus known in the prior art. In some embodiments, the electronic apparatus may include but is not limited to a laptop computer, a pen-input computer, a mobile computer, an e-book player, a portable phone, a portable fax machine, a portable copier, a portable printer, a head-mounted stereo headset, a video recorder, an LCD television, a portable cleaner, a portable CD player, a mini disc, a transceiver, an electronic organizer, a calculator, a memory card, a portable recorder, a radio, a backup power supply, a motor, an automobile, a motorcycle, a power-assisted bicycle, a bicycle, a lighting fixture, a toy, a game console, a clock, a power tool, a flashlight, a camera, a large household battery, or a lithium-ion capacitor.

## Examples

The following examples and comparative examples are provided to describe the embodiments of this application more specifically. Various tests and evaluations were conducted according to the methods described below.

Test methods and devices:

Test for binding force F between negative electrode plate and separator:

A 15 mm wide and 60 mm long negative electrode plate bonded with a separator was obtained through cut. 20 mm wide and 100 mm long double-sided tape was used to fix the sample on a steel plate with a test surface facing down. One end of a paper strip, with a width equal to that of the sample and a length 150 mm greater than that of the sample, was inserted under the sample and fixed with crepe tape. The steel plate was fixed at the bottom of a Gotech tensile machine, the other end of the paper strip was fixed to clamps on the Gotech tensile machine, and the Gotech tensile machine was started. After the tensile force stabilized, the tensile data was recorded as a binding force.

**Test for thickness $T_1$ of electrode assembly:**

In an environment of (25 $\pm$ 3)°C, a thickness of a lithium-ion battery was measured using a micrometer, and recorded as $T_0$. Then the lithium-ion battery was disassembled, and a thickness of a packaging bag after disassembly was measured and recorded as $T_3$. A thickness of the electrode assembly $T_1 = T_0 - T_3$.

**Test for OI value of negative electrode plate:**

A 004 diffraction line pattern and a 110 diffraction line pattern in an X-ray diffraction pattern of a carbon coating in the negative electrode were tested according to the People's Republic of China Mechanical Industry Standard JB/T 4220-2011 "Method for determination of lattice parameters of artificial graphite". Test conditions were as follows: CuK$\alpha$ radiation was used as an X ray source, and a filter or a monochromator was used for filtering in CuK$\alpha$ radiation. An operating voltage of an X-ray tube was (30-35) kV, and an operating current was (15-20) mA. A scanning speed of a counter was 1/4 (°)/min. When the 004 diffraction line pattern was recorded, a scanning range at a diffraction angle 2θ was 53° to 57°. When the 110 diffraction line pattern was recorded, a scanning range at a diffraction angle 2θ was 75° to 79°. A c-axis length of a unit cell obtained from the 004 diffraction line pattern was recorded as $C_{004}$. An a-axis length of a unit cell obtained from the 110 diffraction line pattern was recorded as $C_{110}$. An OI value was calculated using the following formula:

$$\text{OI value} = C_{004}/C_{110}$$

**Test for thickness $T_2$ of binding layer:**

A portion of the separator in the electrode assembly not facing towards the positive electrode active material layer or the negative electrode active material layer was selected, a cross-section of the separator was prepared by using an ion beam cross-section polisher (CP), and a thickness $T_2$ of the binding layer was measured by using a scanning electron microscope (ZEISS Sigma/X-max).

**Measurement of groove depth H, groove width W, groove spacing S, and cross-sectional area A of groove:**

A laser confocal microscope of model VK-1050 was used to photograph a groove region to obtain optical and depth information of the electrode plate within a field of view of the microscope. At 20$\times$ magnification, a surface of the electrode plate was scanned in a laser confocal mode. After scanning was completed, measurement data obtained were processed in data analysis software associated with the instrument. A reference plane was set for the measurement data by using a "reference plane setting" function in "process image". Then, a "smooth" function was selected, with a "5$\times$5" size and a "simple average" type selected, to smooth the image. After processing, a "contour measurement" function was used to measure groove parameters.

Groove depth H and groove width W: As shown in FIG. 3, a depth difference between a deepest point of the groove and a reference plane was the groove depth, and a distance between intersection points of two sides of the groove with the reference plane was the groove width. Along a same groove, a measurement was taken every 10 $\mu$m, and for a total of 20 measurements, average depth and width values of the 20 measurements were recorded as the groove depth H and width W.

Groove spacing S: For adjacent grooves (viewed along a length direction of the electrode plate, when overlapping portions of two adjacent grooves were greater than 50% of their respective lengths, they were considered adjacent grooves), in a direction perpendicular to the grooves, a distance between midpoints of widths of the two grooves was the groove spacing. Along the selected grooves, a measurement was taken every 10 $\mu$m, and for a total of 20 measurements, and an average value was calculated and recorded as the groove spacing S.

Groove area A: A laser confocal microscope of model VK-1050 was used to photograph a groove region to obtain optical and depth information of the electrode plate within the field of view of the microscope. At 20$\times$ magnification, the surface of the electrode plate was scanned in the laser confocal mode. After scanning was completed, depth data relative to a reference line for each pixel width were obtained. Within the above groove width range, a depth ($h_i$) on each pixel width

($w_0$) was integrated: A = = $\Sigma_i h_i * w_0$, which was the cross-sectional area A of the groove.

**Test for capacity retention rate and thickness swelling rate of lithium-ion battery:**

At 25°C, a lithium-ion battery was charged at a constant rate of 0.7C to a voltage of 4.5 V, then charged at a constant voltage of 4.5 V to a current of 0.05C, and then discharged at a constant rate of 1C to a voltage of 3.0 V. This was one charge-discharge cycle. After 500 charge-discharge cycles were repeated, a capacity retention rate and a thickness swelling rate of the lithium-ion battery were tested.

Capacity retention rate of lithium-ion battery after 500 cycles = discharge capacity after 500 cycles/discharge capacity after the first cycle $\times$ 100%.

Thickness swelling rate of lithium-ion battery after 500 cycles = thickness of lithium-ion battery after 500 cycles/thickness of lithium-ion battery after the first cycle $\times$ 100%.

**Test for cycling interface at negative electrode plate of lithium-ion battery:**

The lithium-ion battery after 500 cycles was charged at 25°C at a constant rate of 0.7C to a voltage of 4.5 V, and then charged at a constant voltage of 4.5 V to a current of 0.05C. Then, the battery was disassembled. A cycling interface of the negative electrode plate was manually observed by an operator. If intermittent dotted purple spots, lithium precipitation, or lithium precipitation on purple spots appeared on a surface of the negative electrode plate, it was determined that the negative electrode plate had a minor interface issue. If a main body of the negative electrode plate exhibited large-area continuous purple spots, lithium precipitation, or lithium precipitation on purple spots, it was determined that the negative electrode plate had a severe interface issue.

**Test for hot-box pass rate of lithium-ion battery:**

The lithium-ion battery was placed in a sealed temperature-controlled box, charged at 25°C at a constant rate of 0.7C to a voltage of 4.5 V, and then charged at a constant voltage of 4.5 V to a current of 0.05C. Then, the temperature-controlled box was heated at (5 $\pm$ 2)°C/min and when reaching the temperature of 130°C, was maintained at that temperature for 60 min. After the temperature-controlled box naturally cooled, whether the lithium-ion battery caught fire or exploded was observed. The lithium-ion battery was considered to have passed the test that if it did not catch fire or explode. 100 lithium-ion batteries were tested in each example or comparative example. Hot-box pass rate (%) = number of passes/100 $\times$ 100%.

**Example 1**

<Preparation of negative electrode plate>

Artificial graphite (with an OI value of 14), sodium carboxymethyl cellulose (CMC), and styrene-butadiene rubber (SBR) were mixed at a mass ratio of 97.5:1:1.5, and deionized water was added to prepare a slurry with a solid content of 75 wt%. The slurry was stirred to uniformity. The slurry was uniformly applied on one surface of a negative electrode current collector copper foil with a thickness of 4 $\mu$m, and dried at 85°C to obtain a negative electrode plate whose negative electrode active material layer was 50 $\mu$m thick. Then, the above steps were repeated on the other surface of the negative electrode plate to obtain a negative electrode plate coated with the negative electrode active material on two surfaces. The obtained negative electrode plate was cold-pressed, and grooves were etched on a surface of the negative electrode active material layer by using laser processing technology, followed by slitting, cutting, tab welding region cleaning, and tab welding to obtain a negative electrode plate. Parameters such as the groove depth H, groove width W, groove spacing S, and cross-sectional area A of the grooves are shown in Table 1.

<Preparation of positive electrode plate>

Lithium cobalt oxide, polyvinylidene fluoride, and a conductive agent Super P were mixed at a mass ratio of 96:2:2, and N-methylpyrrolidone (NMP) was added as a solvent to prepare a slurry with a solid content of 75 wt%. The slurry was stirred to uniformity. The slurry was uniformly applied on one surface of a positive electrode current collector aluminum foil with a thickness of 9 $\mu$m, and dried at 95°C to obtain a positive electrode plate whose positive electrode active material layer was 60 $\mu$m thick. Then, the above steps were repeated on the other surface of the negative electrode plate to obtain a positive electrode plate coated with the positive electrode active material on two surfaces. The obtained positive electrode plate was cold-pressed, slit, and cut, followed by tab welding region cleaning and tab welding to obtain a positive electrode plate.

<Preparation of electrolyte>

Ethylene carbonate, diethyl carbonate, ethyl methyl carbonate, and vinylene carbonate were mixed at a mass ratio of 8:85:5:2 to obtain a non-aqueous organic solvent. Then, a lithium salt $LiPF_6$ was mixed with the obtained non-aqueous organic solvent at a mass ratio of 8:92 to prepare an electrolyte.

<Preparation of separator>

<Preparation of substrate layer>

A polypropylene film with a thickness of 5 $\mu$m was used.

<Preparation of heat-resistant material layer>

Aluminum oxide ceramic particles, butadiene-styrene polymer, and deionized water were mixed at a mass ratio of 35:10:55, and 30 kg of butadiene-styrene polymer and deionized water were added to a 60 L double planetary mixer and dispersed at 45°C for 3 hours. Then, 16.1 kg of aluminum oxide ceramic powder was added to the mixer and dispersed at high speed at 45°C for 2 hours. Then, ball milling was performed by using a nano grinder for 1.5 hours, with spherical zirconia beads with a diameter of 6 $\mu$m as a grinding medium, to obtain a heat-resistant material layer slurry.

A surface of the substrate was coated using a transfer coating method, with a coating speed of 6 m/min and a coating amount controlled at 0.18 mg/cm$^2$, and a coating thickness of 1.5 $\mu$m. A three-stage drying method was used, with each oven section having a length of 3 m and set temperatures of 50°C, 60°C, and 60°C, so as to form a substrate layer with a heat-resistant material layer on one surface. Then, the above steps were repeated on the other surface of the substrate layer to form a heat-resistant material layer having its two surfaces coated.

<Preparation of binding layer>

Polymer particles with a core-shell structure were used, with an outer shell of styrene-acrylate copolymer, a core of acrylate polymer, a total swelling degree of 450%, and a particle size of 0.45 $\mu$m. A polymer binding layer slurry was made from 25 parts by mass of core-shell structure polymer emulsion (with a solid content of 40%), 40 parts by mass of deionized water, and 35 parts by mass of ethanol. The preparation process was as follows: 50 kg of the deionized water and ethanol solvent were added to a double planetary mixer and mixed at 25°C for 1 hour; and then, 16.7 kg of the core-shell structure polymer emulsion was added and dispersed at 45°C for 2 hours to obtain the polymer binding layer slurry.

A surface of the heat-resistant material layer of the porous substrate was coated by using a gravure roll coating method to form a structure having its two surfaces coated, with the mass and thickness of the coatings on the two surfaces kept consistent. A coating speed was 6 m/min, a coating amount was controlled at 0.036 mg/cm$^2$, and drying was performed by using a three-stage drying method, with each oven section having a length of 3 m and set temperatures of 50°C, 60°C, and 60°C. After drying, a polymer binding layer stacked out of single-layer particles was obtained, with a binding layer thickness of 2 $\mu$m.

<Preparation of lithium-ion battery>

The prepared positive electrode plate, separator, and negative electrode plate were stacked in sequence, with the grooves of the negative electrode plate facing towards the positive electrode plate, and the separator positioned between the positive electrode plate and the negative electrode plate for separation, and wound to obtain an electrode assembly, with a thickness of the electrode assembly as shown in Table 1. The electrode assembly was placed in an aluminum-plastic film packaging bag, dried, injected with an electrolyte, and subjected to vacuum sealing, standing, formation, degassing, and trimming processes to obtain a lithium-ion battery.

Example 2 to Example 25

The same as Example 1 except that parameters such as the thickness $T_1$ of the electrode assembly, OI value of the graphite, thickness $T_2$ of the binding layer, groove depth H, groove width W, groove spacing S, and cross-sectional area A of the groove were adjusted as shown in Table 2 in <Preparation of negative electrode plate> and <Preparation of lithium-ion battery>.

Example 26

In addition to adjustments in <Preparation of separator>, the rest parameters were adjusted as shown in Table 2 on the basis of Example 9.

<Preparation of separator>:

<Preparation of substrate layer>

A polypropylene film with a thickness of 9 $\mu$m was used.

<Preparation of binding layer>

Polyvinylidene fluoride and aluminum oxide ceramic particles were mixed at a mass ratio of 60:40, and NMP was added as a solvent to prepare a binding layer slurry with a solid content of 75 wt%. The slurry was stirred to uniformity. The binding layer slurry was applied on a surface of a substrate layer on one side, and dried at 90°C to obtain a binding layer, with the thickness of the binding layer shown in Table 2. Then, the above steps were repeated on a surface of a substrate layer on the other side to form a binding layer having its two surfaces coated, so as to obtain a separator.

Example 27

The same as Example 26 except that the type of the polymer in <Preparation of separator> was adjusted to polyvinylidene fluoride-hexafluoropropylene copolymer.

Comparative Example 1

The same as Example 1 except that <Preparation of negative electrode plate> was different from Example 1.

<Preparation of negative electrode plate>

Artificial graphite (with an OI value of 14), conductive carbon black (SP), sodium carboxymethyl cellulose (CMC), and styrene-butadiene rubber (SBR) were mixed at a mass ratio of 96.5:1:1:1.5, with deionized water added to prepare a slurry with a solid content of 75 wt%. The slurry was stirred to uniformity. The slurry was uniformly applied on one surface of a negative electrode current collector copper foil with a thickness of 6 $\mu$m, and dried at 85°C to obtain a negative electrode plate whose negative electrode active material layer was 50 $\mu$m thick. Then, the above steps were repeated on the other surface of the negative electrode plate to obtain a negative electrode plate coated with the negative electrode active material on two surfaces, followed by slitting, cutting, drying at 110°C under vacuum for 4 hours, and tab welding to obtain a negative electrode plate.

Comparative Example 2

The same as Comparative Example 1 except that the thickness of the binding layer was adjusted to 5 $\mu$m in <Preparation of separator> to control the binding force F between the negative electrode plate and the separator to 12 N/m.

Comparative Example 3 and Comparative Example 4

The same as Example 1 except that preparation parameters such as the thickness $T_1$ of the electrode assembly, groove width W, and groove spacing S were adjusted in <Preparation of negative electrode plate> and <Preparation of lithium-ion battery>, as shown in Table 1.

Table 1

| | Thickness $T_1$ of electrode assembly (mm) | OI value of negative electrode plate | Thickness $T_2$ of binding layer ($\mu$m) | Groove depth H ($\mu$m) | Groove width W (mm) | Groove spacing S (mm) | Satisfies $W \geq S \times T_1/1000$? | Binding force F between negative electrode plate and separator (N/m) | Thickness swelling rate | Hot-box pass rate | Cycling interface at negative electrode plate | Capacity retention rate |
|---|---|---|---|---|---|---|---|---|---|---|---|---|
| Example 1 | 5 | 14 | 2 | 5 | 0.1 | 2 | Yes | 16.1 | 8.2% | 10/10 | 15% | 81% |
| Example 2 | 5 | 14 | 2 | 5 | 0.1 | 5 | Yes | 14.7 | 9.1% | 10/10 | 19% | 76% |
| Comparative Example 1 | 5 | 14 | 2 | / | / | / | / | 15.3 | 13.2% | 6/10 | 35% | 48% |
| Comparative Example 2 | 5 | 14 | 5 | / | / | / | / | 20.5 | 6.3% | 2/10 | 15% | 84% |
| Comparative Example 3 | 5 | 14 | 2 | 5 | 0.04 | 10 | No | 14.4 | 13.2% | 8/10 | 33% | 51% |
| Comparative Example 4 | 80 | 14 | 2 | 5 | 0.1 | 2 | No | 14.9 | 12.6% | 8/10 | 30% | 59% |
| Note: "/" in Table 1 means that a related preparation parameter is absent | | | | | | | | | | | | |

Table 2

| | Thickness $T_1$ of electrode assembly (mm) | OI value of graphite | Thickness $T_2$ of binding layer ($\mu$m) ($\mu$m) | Groove depth H ($\mu$m) | Groove width W (mm) | Groove spacing S (mm) | Cross-sectional area A of groove ($\mu$m$^2$) |
|---|---|---|---|---|---|---|---|
| Example 1 | 5 | 14 | 2 | 5 | 0.1 | 2 | 0.395 |
| Example 2 | 5 | 14 | 2 | 5 | 0.1 | 5 | 0.392 |
| Example 3 | 5 | 14 | 2 | 5 | 0.1 | 10 | 0.39 |
| Example 4 | 5 | 14 | 2 | 5 | 0.1 | 20 | 0.394 |
| Example 5 | 5 | 14 | 2 | 5 | 0.015 | 2 | 0.049 |
| Example 6 | 5 | 14 | 2 | 5 | 0.02 | 2 | 0.076 |
| Example 7 | 5 | 14 | 2 | 5 | 0.05 | 1 | 0.189 |
| Example 8 | 5 | 14 | 2 | 5 | 0.025 | 0.05 | 0.086 |
| Example 9 | 5 | 14 | 2 | 5 | 0.05 | 0.1 | 0.187 |
| Example 10 | 5 | 14 | 2 | 5 | 0.2 | 10 | 0.752 |
| Example 11 | 5 | 14 | 2 | 5 | 0.5 | 10 | 1.851 |
| Example 12 | 5 | 14 | 2 | 5 | 0.6 | 5 | 2.322 |
| Example 13 | 5 | 14 | 5 | 25 | 0.2 | 0.6 | 4.121 |
| Example 14 | 5 | 14 | 5 | 25 | 0.3 | 0.6 | 7.225 |
| Example 15 | 5 | 14 | 5 | 25 | 0.1 | 2 | 1.892 |
| Example 16 | 5 | 14 | 10 | 25 | 0.1 | 2 | 1.789 |
| Example 17 | 5 | 14 | 10 | 35 | 0.1 | 2 | 2.564 |
| Example 18 | 1 | 14 | 2 | 5 | 0.4 | 0.5 | 1.456 |
| Example 19 | 80 | 14 | 2 | 5 | 0.2 | 0.5 | 0.746 |
| Example 20 | 80 | 14 | 2 | 5 | 0.05 | 0.1 | 0.183 |
| Example 21 | 5 | 8 | 2 | 5 | 0.05 | 0.1 | 0.187 |
| Example 22 | 5 | 10 | 2 | 5 | 0.05 | 0.1 | 0.191 |
| Example 23 | 5 | 17 | 2 | 5 | 0.05 | 0.1 | 0.19 |
| Example 24 | 5 | 20 | 2 | 5 | 0.05 | 0.1 | 0.184 |
| Example 25 | 5 | 25 | 2 | 5 | 0.05 | 0.1 | 0.188 |
| Example 26 | 5 | 14 | 2 | 5 | 0.05 | 0.1 | 0.187 |
| Example 27 | 5 | 14 | 2 | 5 | 0.05 | 0.1 | 0.187 |
| Note: "/" in Table 2 means that a related preparation parameter is absent | | | | | | | |

**Table 3**

| | Satisfies $W \geq S \times T_1/1000$? | Satisfies $W \leq 2 \times S \times T_1$? | Satisfies $S \times T_1/400 \leq W \leq S \times T_1/2$? | Satisfies $S/OI \leq 0.5$? | Satisfies $0.005 \leq S/OI \leq 0.03$? | Satisfies $H \leq T_2 + 20$? | Satisfies $0.3 \times (W \times H) < A < 0.95 \times (W \times H)$? | Satisfies $0.35 \times (W \times H) < A < 0.8 \times (W \times H)$? | Thickness swelling rate | Hot-box pass rate | Cycling interface at negative electrode plate | Capacity retention rate |
|---|---|---|---|---|---|---|---|---|---|---|---|---|
| Example 1 | Yes | Yes | Yes | Yes | No | Yes | Yes | Yes | 8.2% | 10/10 | 15% | 81% |
| Example 2 | Yes | Yes | Yes | Yes | No | Yes | Yes | Yes | 9.1% | 10/10 | 19% | 76% |
| Example 3 | Yes | Yes | No | No | No | Yes | Yes | Yes | 11.6% | 10/10 | 25% | 70% |
| Example 4 | Yes | Yes | No | No | No | Yes | Yes | Yes | 13.5% | 10/10 | 32% | 64% |
| Example 5 | Yes | Yes | No | Yes | No | Yes | Yes | Yes | 12.9% | 10/10 | 28% | 68% |
| Example 6 | Yes | Yes | No | Yes | No | Yes | Yes | Yes | 10.7% | 10/10 | 21% | 73% |
| Example 7 | Yes | Yes | Yes | Yes | No | Yes | Yes | Yes | 8.4% | 10/10 | 16% | 80% |
| Example 8 | Yes | Yes | Yes | Yes | Yes | Yes | Yes | Yes | 6.8% | 10/10 | 7% | 90% |
| Example 9 | Yes | Yes | Yes | Yes | No | Yes | Yes | Yes | 5.7% | 10/10 | 5% | 92% |
| Example 10 | Yes | Yes | Yes | No | No | Yes | Yes | Yes | 10.3% | 10/10 | 20% | 73% |
| Example 11 | Yes | Yes | Yes | No | No | Yes | Yes | Yes | 9.1% | 10/10 | 20% | 75% |
| Example 12 | Yes | Yes | Yes | Yes | No | Yes | Yes | Yes | 8.6% | 10/10 | 17% | 79% |
| Example 13 | Yes | Yes | Yes | Yes | No | Yes | No | No | 8.2% | 10/10 | 15% | 82% |
| Example 14 | Yes | Yes | Yes | Yes | No | Yes | Yes | Yes | 8.9% | 10/10 | 19% | 75% |
| Example 15 | Yes | Yes | Yes | Yes | No | Yes | Yes | Yes | 8.8% | 10/10 | 18% | 77% |
| Example 16 | Yes | Yes | Yes | Yes | No | Yes | Yes | Yes | 9.1% | 10/10 | 19% | 75% |
| Example 17 | Yes | Yes | Yes | Yes | No | No | Yes | Yes | 11.4% | 10/10 | 23% | 71% |
| Example 18 | Yes | Yes | No | Yes | No | Yes | Yes | Yes | 7.8% | 10/10 | 11% | 83% |
| Example 19 | Yes | Yes | Yes | Yes | No | Yes | Yes | Yes | 7.3% | 10/10 | 10% | 85% |
| Example 20 | Yes | Yes | Yes | Yes | Yes | Yes | Yes | Yes | 7.1% | 10/10 | 9% | 88% |
| Example 21 | Yes | Yes | Yes | Yes | Yes | Yes | Yes | Yes | 8.9% | 10/10 | 17% | 78% |
| Example 22 | Yes | Yes | Yes | Yes | Yes | Yes | Yes | Yes | 8.1% | 10/10 | 13% | 82% |
| Example 23 | Yes | Yes | Yes | Yes | Yes | Yes | Yes | Yes | 5.9% | 10/10 | 6% | 92% |

| | Satisfies $W \geq S \times T_1/1000$? | Satisfies $W \leq 2 \times S \times T_1$? | Satisfies $S \times T_1/400 \leq W \leq S \times T_1/2$? | Satisfies $S/OI \leq 0.5$? | Satisfies $0.005 \leq S/OI \leq 0.03$? | Satisfies $H \leq T_2 + 20$? | Satisfies $0.3 \times (W \times H) < A < 0.95 \times (W \times H)$? | Satisfies $0.35 \times (W \times H) < A < 0.8 \times (W \times H)$? | Thickness swelling rate | Hot-box pass rate | Cycling interface at negative electrode plate | Capacity retention rate |
|---|---|---|---|---|---|---|---|---|---|---|---|---|
| Example 24 | Yes | Yes | Yes | Yes | Yes | Yes | Yes | Yes | 6.8% | 10/10 | 7% | 89% |
| Example 25 | Yes | Yes | Yes | Yes | No | Yes | Yes | Yes | 7.8% | 10/10 | 10% | 84% |
| Example 26 | Yes | Yes | Yes | Yes | Yes | Yes | Yes | Yes | 6.3% | 10/10 | 6% | 88% |
| Example 27 | Yes | Yes | Yes | Yes | Yes | Yes | Yes | Yes | 6.6% | 10/10 | 6% | 89% |

Referring to Table 1, from Examples 1 and 2 and Comparative Examples 1 to 4, it can be seen that in the lithium-ion battery of this application, with the grooves provided on the surface of the negative electrode active material layer facing towards the positive electrode plate and the relationship between the groove width, groove spacing, and electrode assembly thickness adjusted within the ranges of this application, the binding force between the negative electrode plate and the separator can be improved. Moreover, a hot-box pass rate of the lithium-ion battery is significantly improved, and a thickness swelling rate after cycling of the lithium-ion battery is significantly reduced, indicating that the lithium-ion battery of this application has excellent cycling stability and safety, especially excellent cycling stability and safety at high temperature.

Referring to Tables 2 and 3, the groove spacing, groove width, binding layer thickness, and groove depth typically also affect the performance of the lithium-ion battery. From Examples 1 to 25, it can be seen that when $W \geq S \times T_1/1000$ is satisfied, with the above parameters adjusted within the ranges of this application, a lithium-ion battery with excellent cycling stability and safety can be obtained.

The cross-sectional area of the groove typically also affects the performance of the lithium-ion battery. From Examples 13 to 15, it can be seen that when $0.3 \times (W \times H) < A < 0.95 \times (W \times H)$ is satisfied, with the above parameters adjusted within the ranges of this application, a lithium-ion battery with excellent cycling stability and safety can be obtained.

The structure of the binding layer in the separator, the type of the polymer in the binding layer, and the type of the heat-resistant material in the heat-resistant material layer typically also affect the performance of the lithium-ion battery. From Examples 26 and 27, it can be seen that when $W \geq S \times T_1/1000$ is satisfied, with the above parameters adjusted within the ranges of this application, a lithium-ion battery with excellent cycling stability and safety can be obtained.

It should be noted that, in this document, relational terms such as first and second are used merely to distinguish one entity or operation from another entity or operation, without necessarily requiring or implying any actual such relationship or order between these entities or operations. In addition, the terms "include", "comprise", or any of their variants are intended to cover a non-exclusive inclusion, such that a process, method, article, or device that includes a series of elements includes not only those elements but also other elements that are not expressly listed, or further includes elements inherent to such process, method, article, or device. Without more restrictions, an element preceded by the statement "includes a..." does not preclude the presence of other identical elements in the process, method, article, or device that includes the element.

The above are merely preferred embodiments of this application and are not intended to limit this application. Any modifications, equivalent replacements, and improvements made within the spirit and principles of this application shall be included within the protection scope of this application.

## Claims

1.   A secondary battery comprising an electrode assembly, the electrode assembly comprising a positive electrode plate, a negative electrode plate, and a separator, the separator being disposed between the positive electrode plate and the negative electrode plate, and the negative electrode plate comprising a negative electrode current collector and a negative electrode active material layer, wherein

    a surface of the negative electrode active material layer facing towards the positive electrode plate has grooves, a width of the groove is W mm, and a spacing of the grooves is S mm; and
    a thickness of the electrode assembly is $T_1$ mm, satisfying: $W \geq S \times T_1/1000$.

2.   The secondary battery according to claim 1, wherein $W \leq 2 \times S \times T_1$.

3.   The secondary battery according to claim 1, wherein $S \times T_1/400 \leq W \leq S \times T_1/2$.

4.   The secondary battery according to claim 1, satisfying at least one of the following conditions:

$$(a)\ 0.05 \leq S \leq 10;$$

or

$$(b)\ 0.02 \leq W \leq 0.5.$$

**5.** The secondary battery according to claim 1, wherein an OI value of the negative electrode plate and S satisfy: $S/OI \leq 0.5$;

wherein the OI value $= C_{004}/C_{110}$, $C_{004}$ is a peak area obtained from a diffraction line pattern of a (004) plane in an X-ray diffraction pattern, and $C_{110}$ is a peak area obtained from a diffraction line pattern of a (110) plane in an X-ray diffraction pattern.

**6.** The secondary battery according to claim 5, wherein $0.005 \leq S/OI \leq 0.03$, and $8 \leq OI \leq 25$.

**7.** The secondary battery according to claim 1, wherein a surface of the separator facing towards the negative electrode plate is provided with a binding layer, and the binding layer comprising a polymer;

wherein based on a mass of the binding layer, a content of the polymer is 30% to 100%.

**8.** The secondary battery according to claim 7, wherein a binding force between the separator and the negative electrode plate is F N/m, satisfying $F > 3$.

**9.** The secondary battery according to claim 7, wherein a thickness of the binding layer is $T_2 \mu m$, and a depth of the grooves is H $\mu m$, satisfying: $H \leq T_2 + 20$.

**10.** The secondary battery according to claim 9, wherein a cross-sectional area of the grooves is A $\mu m^2$, satisfying: $0.3 \times (W \times H) < A < 0.95 \times (W \times H)$, and $2 \leq H \leq 50$.

**11.** The secondary battery according to claim 10, wherein $0.35 \times (W \times H) < A < 0.8 \times (W \times H)$.

**12.** The secondary battery according to claim 7, wherein the polymer comprises at least one of polyvinylidene fluoride, polyvinylidene fluoride-hexafluoropropylene copolymer, styrene-butadiene copolymer, polyacrylonitrile, butadiene-acrylonitrile polymer, polyacrylic acid, polyacrylate, or acrylate-styrene copolymer.

**13.** The secondary battery according to claim 1, wherein, along a width direction of the negative electrode plate, the grooves form a structure penetrating through the negative electrode plate;

wherein the grooves comprise a first segment with a width of $W_1$ and a second segment with a width of $W_2$, satisfying $1.2 < W_1/W_2 < 1.8$.

**14.** The secondary battery according to claim 1, wherein, along a width direction of the negative electrode plate, the grooves form a structure not penetrating through the negative electrode plate.

**15.** An electronic apparatus comprising the secondary battery according to any one of claims 1 to 14.

FIG. 1

FIG. 2

FIG. 3

FIG. 4

FIG. 5

FIG. 6

FIG. 7

FIG. 8

FIG. 9

## INTERNATIONAL SEARCH REPORT

| International application No. |
|---|
| **PCT/CN2023/085089** |

| A. | CLASSIFICATION OF SUBJECT MATTER |
|---|---|
| | H01M10/0587(2010.01)i; H01M4/13(2010.01)n; H01M10/0525(2010.01)n |

According to International Patent Classification (IPC) or to both national classification and IPC

| B. | FIELDS SEARCHED |
|---|---|

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

CNABS, CNKI, CNTXT, VEN: 电池, 电极, 极片, 凹, 凸, 槽, 坑, 宽, 间隔, 间距, 厚, OL 粘结, 层, battery, electrode, pole, concave, convex, trough, pit, wide, space, pitch, thick+, binder, layer

| C. | DOCUMENTS CONSIDERED TO BE RELEVANT |
|---|---|

| Category* | Citation of document, with indication, where appropriate, of the relevant passages | Relevant to claim No. |
|---|---|---|
| X | US 2009123840 A1 (SHIRANE Takayuki et al.) 14 May 2009 (2009-05-14) description, paragraphs 0003, 0008-0109 and 0113, and figures 1-5A | 1-4, 13-15 |
| Y | US 2009123840 A1 (SHIRANE Takayuki et al.) 14 May 2009 (2009-05-14) description, paragraphs 0003, 0008-0109 and 0113, and figures 1-5A | 5-12 |
| Y | CN 115411223 A (CALB TECHNOLOGY RESEARCH CENTER (SHENZHEN) CO., LTD. et al.) 29 November 2022 (2022-11-29) description, paragraphs 0005-0048 | 5-6 |
| Y | US 5981107 A (MITSUBISHI ELECTRIC CORP.) 09 November 1999 (1999-11-09) description, column 5, line 57 to column 12, line 67, and figures 1-6 | 7-12 |
| A | CN 114335560 A (ZHUHAI COSMX BATTERY CO., LTD.) 12 April 2022 (2022-04-12) entire document | 1-15 |
| A | CN 102881860 A (HITACHI LTD.) 16 January 2013 (2013-01-16) entire document | 1-15 |
| A | CN 110752345 A (HUIZHOU EVE ENERGY CO., LTD.) 04 February 2020 (2020-02-04) entire document | 1-15 |

| ✓ Further documents are listed in the continuation of Box C. | ✓ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **29 November 2023** | **25 December 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/085089**

| C. | DOCUMENTS CONSIDERED TO BE RELEVANT | |
|---|---|---|
| Category* | Citation of document, with indication, where appropriate, of the relevant passages | Relevant to claim No. |
| A | US 2021043940 A1 (LG CHEMICAL LTD.) 11 February 2021 (2021-02-11)<br>entire document | 1-15 |

Form PCT/ISA/210 (second sheet) (July 2022)

# EP 4 693 582 A1

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| US | 2009123840 | A1 | 14 May 2009 | WO | 2007074654 | A1 | 05 July 2007 |
| | | | | KR | 20070095876 | A | 01 October 2007 |
| | | | | KR | 100901048 | B1 | 04 June 2009 |
| | | | | JPWO | 2007074654 | A1 | 04 June 2009 |
| | | | | JP | 4613953 | B2 | 19 January 2011 |
| | | | | CN | 101099251 | A | 02 January 2008 |
| CN | 115411223 | A | 29 November 2022 | CN | 115411223 | B | 24 March 2023 |
| US | 5981107 | A | 09 November 1999 | KR | 19980064085 | A | 07 October 1998 |
| | | | | KR | 100287004 | B1 | 16 April 2001 |
| | | | | EP | 0849819 | A2 | 24 June 1998 |
| | | | | EP | 0849819 | A3 | 24 September 2003 |
| | | | | JPH | 10172537 | A | 26 June 1998 |
| | | | | JP | 3303694 | B2 | 22 July 2002 |
| CN | 114335560 | A | 12 April 2022 | None | | | |
| CN | 102881860 | A | 16 January 2013 | US | 2013017444 | A1 | 17 January 2013 |
| | | | | JP | 2013020820 | A | 31 January 2013 |
| CN | 110752345 | A | 04 February 2020 | CN | 110752345 | B | 30 May 2023 |
| US | 2021043940 | A1 | 11 February 2021 | KR | 20190118833 | A | 21 October 2019 |
| | | | | KR | 102335318 | B1 | 06 December 2021 |
| | | | | EP | 3754756 | A1 | 23 December 2020 |
| | | | | EP | 3754756 | A4 | 28 April 2021 |
| | | | | WO | 2019198938 | A1 | 17 October 2019 |
| | | | | CN | 111902973 | A | 06 November 2020 |

Form PCT/ISA/210 (patent family annex) (July 2022)